# EUROPEAN PATENT SPECIFICATION

(11) **EP 0 701 940 B1**
(45) Date of publication and mention of the grant of the patent: **05.04.2000**
(21) Application number: 94114367.9
(22) Date of filing: 13.09.1994
(51) Int. Cl.: B62D 6/02

(54) **Power Steering System**
Servolenkungseinrichtung
Système de direction assistée

(43) Date of publication of application: 20.03.1996
(73) Proprietor: TRW INC., Lyndhurst Ohio 44124 (US)
(72) Inventor: Sangret, Henry C., St. Clair Shores, Michigan 48081 (US)
(74) Representative: Wagner, Karl H., Dipl.-Ing.

(56) References cited:
- DE-A- 4 138 885
- GB-A- 2 212 463

## Description

### Background of the Invention

The present invention relates to a control valve for a hydraulic vehicle power steering system, and more specifically to a hydromechanical apparatus for resisting actuation of a power steering control valve.

A known power steering system is disclosed in U.S. Patent No. 4,819,545. This power steering system includes a control valve assembly having coaxial inner and outer valve members. A plurality of balls are disposed between a cam surface formed on the outer valve member and a cam surface on an annular force transmitting ring which is pressed against the balls by a spring. Under the influence of pressurized hydraulic fluid acting on the force transmitting ring, the balls and cam surfaces cooperate to resist relative rotation between the valve members.

### Summary of the Invention

The present invention provides a new and improved hydraulically assisted power steering system for automotive vehicles, as set forth in claims 1 and 26. Preferred embodiments of the invention are claimed in the dependent claims. The power steering system includes a manually actuated steering gear including a hydraulic control valve assembly which regulates the flow of pressurized hydraulic fluid from a hydraulic pump to a motor device that effects power to assist an operator in the steering of an automotive vehicle. The control valve assembly includes valve members which are biased to resist rotation relative to each other, but which are rotatable relative to each other to port fluid to the vehicle power steering motor.

A cam, in the form of a rocker arm, is pivotally connected to one of the valve members and includes a portion in contact with the other of the valve members. Upon relative rotation between the valve members, the rocker arm pivots. A force which can be generated by a spring, is applied to one of the valve members and the rocker arm to resist pivoting of the rocker arm and relative rotation between the valve members.

In the invention, the resistance to relative rotation between the valve members changes as the relative angular positions of the inner and outer valve members changes. The rocker arm has cam surfaces with a contour that varies the point of engagement of the rocker arm with a member which resists pivotal movement of the rocker arm.

In operating one embodiment of the invention, a pump supplies fluid to the control valve assembly at a pressure which increases as vehicle speed decreases. The fluid pressure supplied by the pump actuates the power steering motor. The variable fluid pressure supplied by the pump is also used to reduce the resistance to relative rotation and hence actuation of the control valve assembly. The fluid pressure from the pump is conducted to a plurality of piston chambers formed in one of the valve members to reduce the resistance to actuation of the control valve assembly.

In another embodiment of the invention, fluid is conducted to a chamber in which the rocker arm is located. A relief valve controls the pressure in the chamber to create a force, in opposition to the spring, to reduce the resistance to actuation of the control valve assembly.

### Brief Description of the Drawings

The foregoing and other features of the present invention will become more apparent to one skilled in the art upon reading the following description of the present invention with reference to the accompanying drawings, wherein:
Fig. 1 is a schematic view of a first embodiment of a power steering system and illustrates a power steering control valve in section;
Fig. 2 is a fragmentary view of a portion of Fig. 1, on an enlarged scale, illustrating the relationship between inner and outer valve members and a rocker arm when the valve members are in an unactuated condition;
Fig. 3 is a view, similar to Fig. 2, illustrating the relationship between the inner and outer valve members and rocker arm upon relative rotation between the valve members;
Fig. 4 is a schematic view, generally similar to Fig. 1, of a second embodiment of a power steering system and illustrates a second power steering control valve in section;
Fig. 5 is a broken away view of a portion of Fig. 4 on an enlarged scale;
Fig. 6 is an enlarged fragmentary sectional view of a portion of Fig. 4;
Fig. 7 is a schematic view, generally similar to Fig. 1, of a third embodiment of a power steering system and illustrates a third power steering control valve in section; and
Fig. 8 is a view of a portion of Fig. 7, on an enlarged scale, illustrating a second embodiment of the rocker arm.

### Description of Preferred Embodiments

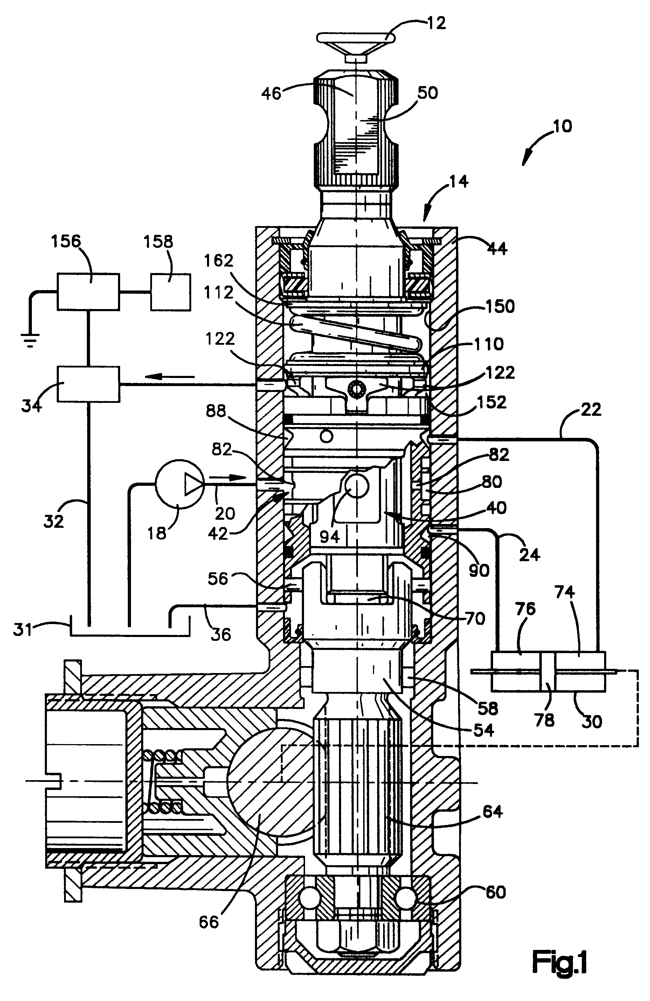

A vehicle steering system 10 (Fig. 1) is operable to turn steerable vehicle wheels (not shown) upon rotation of a steering wheel 12 by an operator of the vehicle. Rotation of the steering wheel 12 actuates an open center power steering control valve 14 to port fluid from an engine driven pump 18 and supply conduit 20 to either one of a pair of motor conduits 22 and 24. High pressure fluid conducted from the supply conduit 20 through one of the motor conduits 22 or 24 effects operation of a power steering motor 30 to turn the steerable vehicle wheels. Fluid is conducted from the motor 30 to a reservoir 31 through the other one of the motor conduits 22 or 24, the power steering control valve 14, a return conduit 32 and a pressure relief valve 34. A drain conduit 36 conducts fluid from a lower portion of the control valve 14 to the reservoir 31.

The control valve 14 includes an inner valve member 40 and an outer valve member or sleeve 42. The outer valve member 42 is cylindrical and encloses the inner valve member 40. The inner valve member 40 and the outer valve member 42 are rotatable relative to each other and to a housing 44 about a common central axis 46.

The inner valve member 40 is formed as one piece with a cylindrical input shaft or valve stem 50 which is connected with the steering wheel 12. The outer valve member 42 is connected with an output member 54 by a pin 56. The output member 54 is rotatably supported in the housing 44 by bearings 58 and 60. The output member 54 has a pinion gear portion 64 which is in meshing engagement with the toothed portion of a rack 66. The rack 66 is drivingly connected with the power steering motor 30 and the steerable vehicle wheels in a known manner.

The inner valve member 40 and the outer valve member 42 are drivingly interconnected through a resilient torsion bar spring 70 (which is only partially visible in Fig. 1). One end of the torsion bar 70 is connected to the input shaft 50 and the other end of the torsion bar 70 is connected to the output member 54. The torsion bar 70 deflects (twists) to enable relative rotation between the inner and outer valve members 40 and 42 and when free urges the inner and outer valve members to their initial positions, as is well known in the art.

The control valve 14 is of the open center type. Therefore, when the power steering control valve 14 is in an initial or an unactuated condition, fluid pressure from the pump 18 is conducted through the motor conduits 22 and 24 to motor cylinder chambers 74 and 76 on opposite sides of a piston 78 in the power steering motor 30. Also, fluid flow from the pump 18 is directed by the control valve 14 to the return conduit 32 and reservoir 31.

Upon rotation of the steering wheel 12 and rotation of the input shaft 50, friction between the road and the road engaging wheels resists turning of the vehicle wheels generating a torque in the steering linkage between the ground wheels and the steering wheel. In response to this torque, the inner valve member 40 will be rotated about the axis 46 relative to the outer valve member 42. This relative rotation moves valving edges on the inner valve member 40 relative to valving edges on the outer valve member 42 to direct high pressure fluid from the pump 18 to one of the motor conduits 22 or 24 and directs fluid from the other motor conduit to the reservoir 31.

For example, rotation of the inner valve member 40 in one direction relative to the outer valve member 42 will reduce the extent of communication of the motor conduit 24 with the reservoir 31 and increase the extent of communication of the motor conduit 24 with the pump 18. This results in high pressure fluid from the pump 18 being conducted to the motor cylinder chamber 76. This high pressure fluid moves the piston 78 toward the right (as viewed in Fig. 1). As the piston 78 moves toward the right (as viewed in Fig. 1), fluid discharged from the chamber 74 is conducted through the motor conduit 22 to the reservoir 31 through the return conduit 32 and the control valve 14.

As the power steering motor 30 operates, the rack 66 rotates the pinion 64 and the output member 54. This rotates the outer valve member 42 relative to the inner valve member 40 returning it to a neutral condition. When the power steering motor 30 is operated to turn the steerable vehicle wheels to an extent corresponding to the extent of rotation of the inner valve member 40, the rack 66 rotates the pinion 64 through a distance sufficient to move the outer valve member 42 to its initial position relative to the inner valve member. When this occurs, the fluid pressure in the motor cylinder chambers 74 and 76 equalizes and the motor 30 stops operating.

Pressurized fluid from the pump 18 is conducted to an annular central groove 80 formed in the outer valve member 42. Fluid flows to the inside of the outer valve member 42 through a pair of diametrically opposite passages 82. The inner and outer valve members 40 and 42 may have the same construction and cooperate with each other and the torsion bar 70 in the same manner as described in U.S. Patent No. 4,276,812, issued July 7, 1981 and entitled "Power Steering Valve and Method of Making Same". However, the inner and outer valve members 40 and 42 could have a different construction if desired.

The inner valve member 40 has a generally square cross sectional configuration with rounded corners which cooperate with axially extending grooves formed inside the outer valve member 42 to control the flow of fluid to and from the motor 30. The ends of one pair of diametrically opposite grooves on the inside of the outer valve member 42 are connected in fluid communication with an annular outer groove 88 connected with the motor conduit 22. A second pair of diametrically opposite axially extending grooves on the inside of the outer valve member 42 are connected in fluid communication with an annular outer groove 90 formed in the outer valve member and connected with the motor conduit 24. A pair of diametrically opposite openings 94 extend radially inwardly to an axially extending central passage in the inner valve member 40. The central passage is connected in fluid communication with the return conduit 32.

An annular force transmitting member or piston 110 is disposed in the power steering control valve housing 44 and is axially movable relative to the inner and outer valve members 40 and 42. The annular piston 110 circumscribes and is connected to the inner valve member 40 for rotation therewith. However, the piston 110 is axially movable relative to the inner valve member 40. The piston 110 is urged axially toward the cylindrical outer valve member 42 by a coil spring 112 which also circumscribes the inner valve member 40 and rotates with the inner valve member.

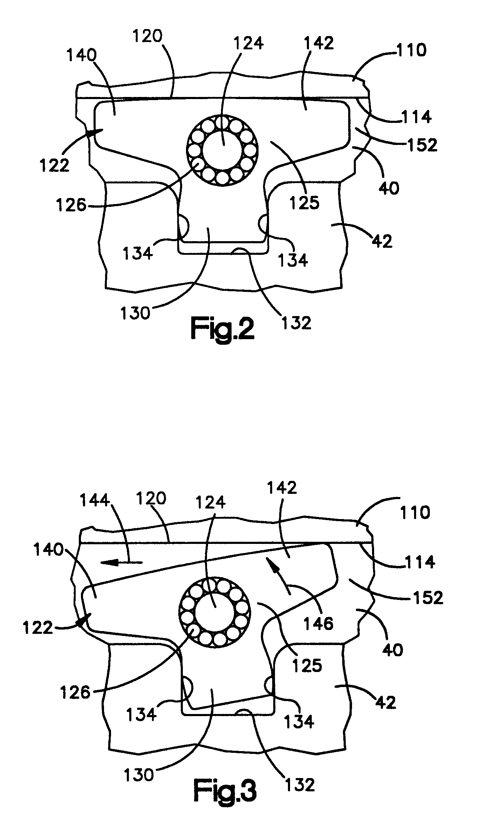

The downward force applied against the piston 110 by the coil spring 112 presses an annular lower surface 114 (Fig. 2) of the piston against the upper surfaces 120 of a plurality of rocker arms 122. The rocker arms 122 are pivotally connected to the inner valve member 40. Preferably there are three rocker arms 122 equally spaced about the inner valve member 40.

Each rocker arm 122 (Fig. 2) is pivotally connected to the inner valve member 40 and the input shaft 50 by a radial pin 124 extending through a central portion 125 of the rocker arm. Bearings 126 support the rocker arm 122 for pivotal movement about the pin 124. The rocker arm 122 is pivotal about a radial axis of the inner valve member 40. The axis about which the rocker arm 122 pivots extends through and is perpendicular to the axis 46 of the inner and outer valve members 40 and 42.

Each rocker arm 122 has a generally T-shaped configuration. Thus, each rocker arm 122 includes a lower portion 130 which extends parallel to the axis 46 of the inner and outer valve members 40 and 42 when the rocker arm is in the initial position of Fig. 2. The lower portion 130 of the rocker arm 122 extends into a recess 132 in an upper end portion of the outer valve member 42. The portion 130 of the rocker arm 122 engages surfaces 134 which define the recess 132 in the outer valve member 42.

The rocker arm 122 includes a pair of side portions 140 and 142 which extend perpendicular to the lower portion 130. The side portions 140 and 142 extend from opposite sides of the central portion 125 so that the rocker arm 122 is generally T-shaped. The side portions 140 and 142 of the rocker arm 122 engage the piston 110 when the rocker arm is in the initial position of Fig. 2.

Upon rotation of the inner valve member 40 relative to the outer valve member 42, the axes about which the rocker arms 122 pivot move relative to the outer valve member. As this occurs, the surfaces 134 of the recesses 132 in the outer valve member 42 apply force against the lower portions 130 of the rocker arms 122. This force pivots the rocker arms 122 about the pins 124. Pivotal movement of the rocker arms about the pins 124 moves a side portion 140 or 142 of each of the rocker arms upwardly (as viewed in Figs. 1 and 2) against the piston 110. The upward force applied by the rocker arms 122 against the piston 110 moves the piston upwardly and compresses the spring 112.

The spring 112 urges the piston 110 downwardly (as viewed in Fig. 1) to apply force against the side portions 140 or 142 (Fig. 2) of the rocker arms 122 as the rocker arms are pivoted by rotation of the inner valve member 40 relative to the outer valve member 42. The force applied against the side portions 140 or 142 of the rocker arms 122 by the piston 110 and spring 112 resists pivoting movement of the rocker arms. By resisting pivoting movement of the rocker arms 122, the piston 110 and spring 112 resist relative rotation between the inner and outer valve members 40 and 42.

Upon rotation of the inner valve member 40 in the direction of the arrow 144 (Fig. 3) relative to the outer valve member 42, the axis about which the rocker arm 122 pivots moves toward the left (as viewed in Fig. 3). This causes the left side surface 134 of the recess 132 in the outer valve member 42 to apply force against the lower portion 130 of the rocker arm 122. The force applied against the lower portion 130 of the rocker arm 122 by the outer valve member 42 pivots the rocker arm in a counterclockwise direction, indicated by the arrow 146 in Fig. 3, about the pin 124. As the rocker arm 122 pivots in a counterclockwise direction (Fig. 3), the side portion 140 of the rocker arm moves away from the piston 110 and the side portion 142 of the rocker arm forces the piston upwardly against the force of the spring 112.

In accordance with one of the features of the first embodiment of the present invention, the torque required to actuate the power steering control valve 14 is decreased as the vehicle speed decreases. Thus, at low vehicle speeds and when the vehicle is stationary, a relatively small torque is required to rotate the inner valve member 40 relative to the outer valve member 42. At higher vehicle speeds, a larger torque is required to rotate the inner valve member 40 relative to the outer valve member 42.

The piston 110 (Fig. 1) cooperates with a cylindrical inner side surface 150 of the housing 44 and the input shaft 50 to form an annular fluid pressure chamber 152 on an axially opposite side of the piston 110 from the spring 112. The rocker arms 122 are located in the fluid pressure chamber 152. The fluid pressure chamber 152 is in fluid communication with the axially extending central passage in the inner valve member 40 and with the reservoir 31. The fluid pressure in the chamber 152 urges the piston 110 away from the rocker arms 122 in opposition to the spring 112.

Rotation of the input shaft 50 and the inner valve member 40 relative to the housing 44 and the outer valve member 42 is resisted by a torque which is a function of the difference between the fluid pressure force applied to the piston 110 and the spring force applied to the piston. As the input shaft 50 is rotated from the initial position, the surfaces 134 of the recess 132 in the outer valve member 42 engage the rocker arms 122 to pivot the rocker arms relative to the inner valve member 40. As this occurs, the portions 142 of the rocker arms 122 engage the piston 110 (Fig. 3) and move the piston against the influence of the spring 112.

The torque required to pivot the rocker arms 122 and move the piston 110 away from the outer valve member 42 varies as a function of the net force urging the piston 110 toward the outer valve member 42. Thus, the greater the net force pressing the piston 110 against the rocker arms 122, the greater is the force required to rotate the input shaft 50 and the inner valve member 40 relative to the output member 54 and the outer valve member 42. The net force pressing the piston 110 against the rocker arms 122 is equal to the difference between the force applied by the spring 112 and the fluid pressure force applied by the fluid in chamber 152. The greater the fluid pressure force applied to the piston 110, the smaller is the force which must be overcome to rotate the inner valve member 40 relative to the outer valve member 42.

The pressure relief valve 34 (Fig. 1) controls the pressure in the chamber 152. An electronic control unit or ECU 156 receives a signal from a speed sensor 158 to control the pressure relief valve 34. As the vehicle speed decreases, the ECU 156 controls the pressure relief valve 34 to reduce the amount of fluid flowing from the chamber 152 to the reservoir 31 and increase the fluid pressure in chamber 152. As the vehicle speed decreases, the force urging the piston 110 toward the rocker arms 122 is decreased to reduce the amount of force applied to the rocker arms that resists pivoting of the rocker arms. Thus, as vehicle speed decreases, the resistance to relative rotation between the inner valve member 40 and the outer valve member 42 is also decreased. The electronic control unit 156 and pressure relief valve 34 may have the same construction and mode of operation as the speed responsive control unit disclosed in U.S. Patent No. 4,819,545.

Upon rotation of the steering wheel 12 and the inner valve member 40, the rocker arms 122 exert a force on the piston 110. This force is added to the fluid pressure force in the chamber 152 to move the piston 110 away from the outer valve member 42. As this occurs, the spring 112 is compressed against a collar 162 which is held against axial movement relative to the valve stem 50.

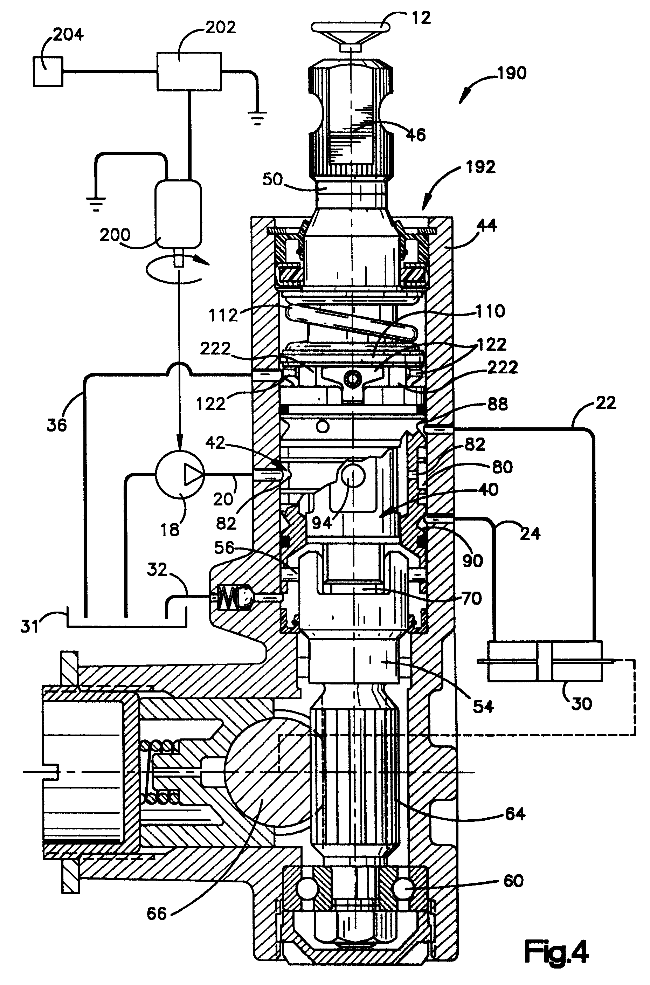

In the embodiment of the invention illustrated in Figs. 1 and 2, fluid pressure in the chamber 152 decreases the resistance provided by the rocker arms 122 to relative rotation between the inner and outer valve members 40 and 42. In the embodiment of the invention illustrated in Figs. 4, 5 and 6, fluid pressure in a plurality of piston chambers decreases the resistance provided by rocker arms to relative rotation between inner and outer valve members. Since the embodiment of the invention illustrated in Figs. 4, 5 and 6 is generally similar to the embodiment of the invention illustrated in Figs. 1 and 2, similar numerals will be utilized to designate similar components.

A vehicle power steering system 190 (Fig. 4) is operable to turn steerable ground engaging vehicle wheels (not shown) upon rotation of a steering wheel 12 by an operator of the vehicle. Rotation of the steering wheel 12 actuates an open center power steering control valve 192 to port fluid from a pump 18 and supply conduit 20 to either one of a pair of motor conduits 22 and 24 when the speed of the vehicle is below a predetermined value. Preferably, the pump 18 is driven by an electric motor 200 although it is possible to use a similar pump driven by the engine and controlled by appropriate flow and pressure controls.

The speed at which the pump 18 is driven by the electric motor 200, and hence the flow of the pump, is determined by an electronic control unit or ECU 202. The ECU 202 receives a signal from a vehicle speed sensor 204. The ECU 202 turns on the electric motor 200 to drive the pump 18 when the speed of the vehicle is below a predetermined speed. The ECU 202 turns the motor 200 off when the speed of the vehicle exceeds the predetermined higher speed. As the vehicle speed changes from low to the predetermined vehicle speed, the motor 200 reduces the speed of the pump 18, and hence the flow from the pump.

When the vehicle speed is below the predetermined speed, the ECU 202 effects operation of the motor 200 to drive the pump 18 at a speed which increases as vehicle speed decreases. Thus, when the vehicle is stationary or moving very slowly, the motor 200 drives the pump 18 at a relatively high speed to supply a larger flow of fluid to the control valve 192. As the speed of the vehicle increases, the speed at which the motor 200 drives the pump 18 decreases and the fluid flow supplied to the control valve 192 and the steering motor decreases. In the illustrated embodiment of the invention, the ECU 202 causes the speed at which the motor 200 drives the pump 18 to vary as an inverse linear function of vehicle speed until the predetermined vehicle speed is reached. When the predetermined vehicle speed is obtained, operation of the pump 18 is interrupted and no hydraulic assist is provided for steering.

Fluid under pressure is conducted from the supply conduit 20 through the control valve 192 to one of the motor conduits 22 or 24 and effects operation of a power steering motor 30 to turn the steerable vehicle wheels at vehicle speeds less than the predetermined speed. Fluid is conducted from the motor 30 to a reservoir 31 through the other one of the motor conduits 22 or 24 and return conduit 32. A drain conduit 36 conducts fluid from an upper portion of the control valve 192 to the reservoir 31.

At vehicle speeds above the predetermined vehicle speed, the motor 200 is deenergized and the pump 18 does not operate. When the pump is off the steerable vehicle wheels are turned under the influence of manual force transmitted from the steering wheel 12 through the control valve 192 to the pinion gear 64. The control valve 192 is of the open center type so that fluid can flow through the control valve between opposite chambers of the power steering motor 30 as the steerable vehicle wheels are turned manually.

The control valve 192 includes an inner valve member 40 and an outer valve member 42. The outer valve member 42 is cylindrical and encloses the inner valve member 40. The inner valve member 40 and the outer valve member 42 are rotatable relative to each other and to a housing 44 about a common central axis 46.

The inner valve member 40 and the outer valve member 42 are drivingly interconnected through a resilient torsion bar spring 70 (which is only partially visible in Fig. 4). One end of the torsion bar 70 is connected to an input shaft 50 formed as one piece with the inner valve member 40. The other end of the torsion bar is connected to an output member 54. The output member 54 is connected to the outer valve member 42 by a pin 56. The torsion bar 70 deflects to enable relative rotation to occur between the inner and outer valve members 40 and 42, and urges the inner and outer valve members to their initial position, as is well known in the art.

Upon rotation of the steering wheel 12 and rotation of the input shaft 50, the inner valve member 40 will be rotated about the axis 46 relative to the outer valve member 42. This relative rotation moves valving edges on the inner valve member 40 relative to valving edges on the outer valve member 42 to direct pressurized fluid from the pump 18 to one of the motor conduits 22 or 24 when the speed of the vehicle is below the predetermined speed. The relative rotation between the inner and outer valve members 40 and 42 also directs fluid from the other motor conduit to the reservoir 31.

Pressurized fluid from the pump 18 is conducted to an annular central groove 80 formed in the outer valve member 42 when the speed of the vehicle is below the predetermined speed. Fluid flows to the inside of the outer valve member 42 through a pair of diametrically opposite passages 82. The inner and outer valve members 40 and 42 may have the same construction and cooperate with each other when the speed of the vehicle is below the predetermined speed in the same manner as described in connection with the embodiment of Fig. 1. However, the inner and outer valve members 40 and 42 could have a different construction if desired.

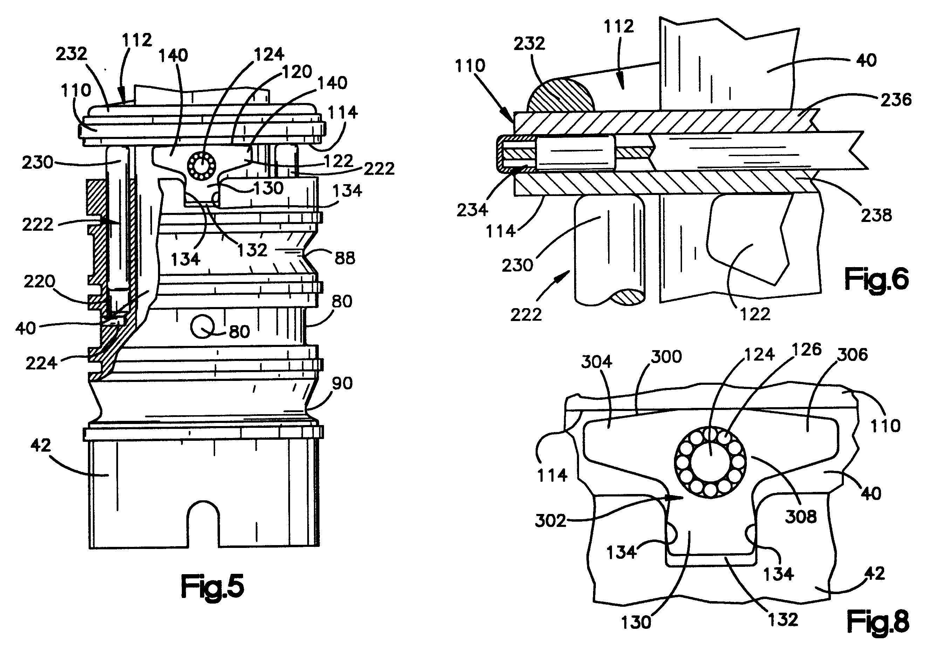

A piston 110 is disposed in the power steering control valve housing 44 and is axially movable relative to the inner and outer valve members 40 and 42. The piston 110 is urged axially toward the outer valve member 42 by a coil spring 112 which is disposed in coaxial relationship with and circumscribes the input shaft 50. The force applied against the piston 110 by the coil spring 112 presses a lower surface 114 (Fig. 5) of the piston 110 against the upper surfaces 120 of a plurality of rocker arms 122.

The rocker arms 122 are pivotally connected to the inner valve member 40. Preferably there are three rocker arms 122 equally spaced about the inner valve member 40. The rocker arms 122 cooperate with the inner and outer valve members 40 and 42 and the piston 110 and spring 112 to resist relative rotation between the inner and outer valve members in the same manner as previously described in conjunction with the embodiment of the invention illustrated in Figs. 1-3.

The outer valve member 42 includes a plurality of, preferably three, axially extending cylindrical chambers 220, one of which is shown in Fig. 5. Located within each of the chambers 220 is an axially extending cylindrical piston 222 engageable with the surface 114 of the piston 110. The piston chambers 220 and pistons 222 have coincident central axes which are parallel to the central axis 46 of the control valve 192. Each of the axially extending chambers 220 is connected in fluid communication with the pump 18 by a radially extending passage 224 (Fig. 5) and the annular outer groove 82 in the outer valve member 42.

Upper end portions 230 of the pistons 222 and a lower end portion 232 of the spring 112 engage opposite sides of piston 110. The spring 112 rotates with the inner valve member 40. The pistons 222 rotate with the outer valve member 42. Although it is preferred to locate the pistons 222 and piston chambers 220 in the outer valve member 42, the pistons and piston chambers could be disposed at other locations in the control valve 192 if desired.

To accommodate relative rotation between the inner and outer valve members 40 and 42, the piston 110 includes an annular thrust bearing assembly 234 (Fig. 6). The thrust bearing assembly 234 is located between flat annular upper and lower thrust plates 236 and 238. The upper thrust plate 236 is engaged by the lower end portion 232 of the spring 112 and rotates with the inner valve member 40. The lower thrust plate 238 is engaged by the pistons 222.

Once the speed of the vehicle has decreased to a speed which is less than the predetermined speed, the ECU 202 causes the motor 200 to drive the pump 18 at a speed which increases as vehicle speed decreases. Therefore, the fluid flow conducted from the pump 18 to the power steering motor 30 and the piston chambers 220 increases as vehicle speed decreases.

When the speed of the vehicle is below the predetermined speed, the ECU 202 turns the motor 200 on to operate the pump 18. The pump 18 supplies pressurized fluid to the passages 224 (Fig. 5) and axially extending chambers 220 in the outer valve member 42. The fluid pressure in the chambers 220 urges the pistons 222 upwardly into engagement with the piston 110. As the speed of the vehicle decreases from the predetermined speed, the fluid flow from the pump 18 increases to increase the fluid pressure in chambers 220. The pump 18 also supplies pressurized fluid to the power steering motor 30 through the control valve 192.

When the speed of the vehicle is substantially low, the fluid pressure in the chambers 220 causes the pistons 222 to move the piston 110 axially upwardly (as viewed in Fig. 5) and out of engagement with the rocker arms 122. When the inner valve member 40 is rotated relative to the outer valve member 42, the rocker arms 122 pivot but do not engage the piston 110. The only resistance to initial relative rotation between the inner and outer valve members 40 and 42 is due to the torsion bar 70. Therefore, when the speed of the vehicle is substantially low, the resistance to relative rotation between the inner and outer valve members 40 and 42 is at a minimum.

When the speed of the vehicle is above the substantially low speed and below the predetermined speed when the pump 18 ceases to operate and there is relative rotation between the inner and outer valve members 40 and 42, the rocker arms 122 pivot into engagement with the piston 110. The force applied against the rocker arms 122 by the piston 110 again assists the torsion bar 70 in resisting relative rotation between the valve members. As the speed of the vehicle increases from the substantially low speed to the predetermined speed, the fluid pressure in chambers 220 decreases. The force which the pistons 222 apply to the piston 110 decreases to increase the resistance to relative rotation between the inner and outer valve members 40 and 42.

When the speed of the vehicle exceeds the predetermined speed, the ECU 202 turns the motor 200 off and the pump 18 does not supply the control valve 192 with high pressure fluid. There is no fluid pressure in the chambers 220 to force the pistons 222 into engagement with the piston 110. As the input shaft 50 is rotated from the initial position, the surfaces 134 of the recesses 132 of the rocker arms 122 engage the piston 110 and move the piston against the influence of the spring 112. The torque required to pivot the rocker arms 122 and move the piston 110 away from the outer valve member 42 resists the relative rotation between the inner and outer valve members 40 and 42.

When the ECU 202 turns the motor 200 off and the pump 18 does not supply the control valve 192 with fluid pressure, the power steering motor 30 is ineffective to assist in turning the steerable vehicle wheels. At this time, manual force which is applied to the steering wheel 12 is effective to turn the steerable vehicle wheels. This manual force is transmitted through the torsion bar 70 and rocker arms 122.

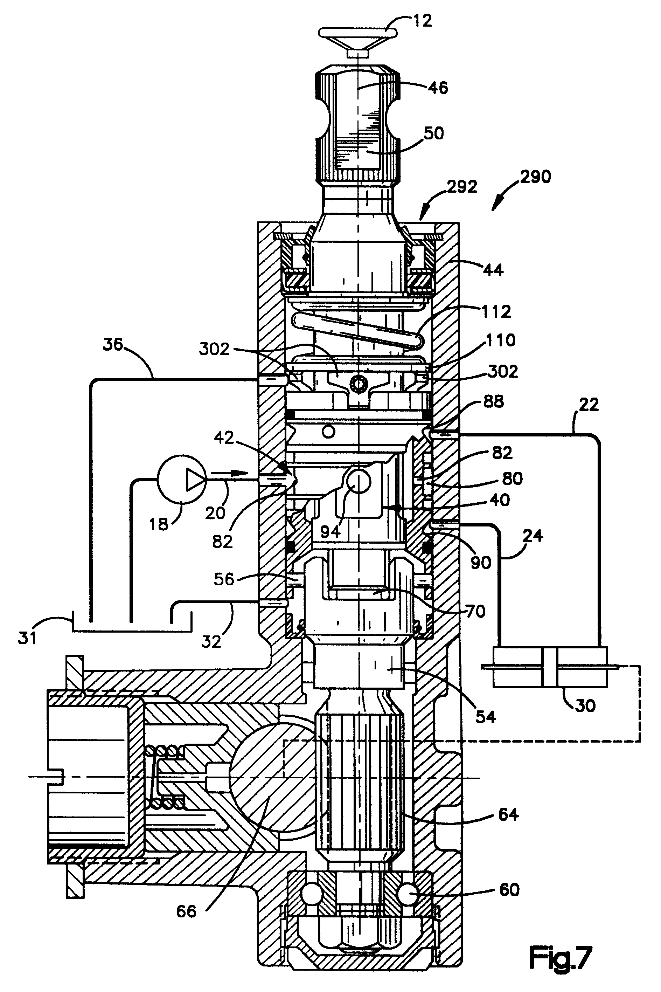

In the embodiment of the invention illustrated in Figs. 1, 2 and 3, the torque applied to the rocker arms 122 to resist pivoting of the rocker arms is controlled by the speed of the vehicle. In the embodiment of the invention illustrated in Figs. 7 and 8, the torque applied to the rocker arms 122 varies as the relative angular positions of the inner and outer valve members 40 and 42 change. Since the embodiment of the invention illustrated in Figs. 7 and 8 is generally similar to the embodiment of the invention illustrated in Figs. 1, 2 and 3, similar numerals will be utilized to designate similar components.

A vehicle power steering system 290 (Fig. 7) is operable to turn steerable vehicle wheels (not shown) upon rotation of a steering wheel 12 by an operator of the vehicle. Rotation of the steering wheel 12 actuates an open center power steering control valve 292 to port fluid from an engine driven pump 18 and supply conduit 20 to either one of a pair of motor conduits 22 and 24. Pressurized fluid conducted from the supply conduit 20 through one of the motor conduits 22 or 24 effects operation of a power steering motor 30 to turn the steerable vehicle wheels. Fluid is conducted from the motor 30 to a reservoir 31 through the other one of the motor conduits 22 or 24, the power steering control valve 292, and a return conduit 32. A drain conduit 36 conducts fluid from the upper portion of the control valve 292 to the reservoir 31.

The control valve 292 includes an inner valve member 40 and an outer valve member or sleeve 42. The outer valve member 42 is cylindrical and encloses the inner valve member 40. The inner valve member 40 and the outer valve member 42 are rotatable relative to each other and to a housing 44 about a common central axis 46.

The inner valve member 40 and the outer valve member 42 are drivingly interconnected through a resilient torsion bar spring 70 (which is only partially visible in Fig. 7). One end of the torsion bar 70 is connected to an input shaft 50 formed as one piece with the inner valve member 40. The other end of the torsion bar is connected to an output member 54 connected to the outer valve member 42. The torsion bar 70 twists to enable relative rotation between the inner and outer valve members 40 and 42 and when free urges the inner and outer valve members to their initial positions, as is well known in the art.

Upon rotation of the steering wheel 12 and rotation of the input shaft 50, the inner valve member 40 will be rotated about the axis 46 relative to the outer valve member 42. This relative rotation moves valving edges on the inner valve member 40 relative to valving edges on the outer valve member 42 to direct pressurized fluid from the pump 18 to one of the motor conduits 22 or 24 and direct fluid from the other motor conduit to the reservoir 31.

Pressurized fluid from the pump 18 is conducted to an annular central groove 80 formed in the outer valve member 42. Fluid flows to the inside of the outer valve member 42 through a pair of diametrically opposite openings 82. The inner and outer valve members 40 and 42 may have the same construction and cooperate with each other as described in connection with the embodiment of Fig. 1. However, the inner and outer valve members 40 and 42 could have a different construction.

A piston 110 is urged axially toward the outer valve member 42 by a coil spring 112 which is disposed in coaxial relationship with and circumscribes the input shaft 50. The downward force applied against the piston 110 by the coil spring 112 presses the lower surface 114 (Fig. 8) of the piston 112 against upper surfaces 300 of a plurality of rocker arms 302 pivotally connected to the inner valve member 40. Preferably there are three rocker arms 302 equally spaced about the inner valve member 40.

Each rocker arm 302 (Fig. 8) is pivotally connected to the inner valve member 40 and the input shaft 50 by a pin 124. Bearings 126 support the rocker arm 302 for pivotal movement about the pin 124 and an axis extending transverse to the axis 46 of the inner and outer valve members 40 and 42. Each rocker arm 302 includes a lower portion 130 extending parallel to the axis 46 of the first and second valve members 40 and 42 and into a recess 132 in the outer valve member 42. The lower portion 130 of the rocker arm 302 engages surfaces 134 which define the recess 132 of the outer valve member 42.

The rocker arm 302 includes a pair of side portions 304 and 306 which extend perpendicular to the portion 130. The portions 304 and 306 extend from opposite sides of a central portion 308 so that the rocker arm 302 is T-shaped. Upon relative rotation between the inner and outer valve members 40 and 42, the rocker arms 302 pivot about the pins 124. One of the side portions 304 or 306 engages the piston 110 to move the piston axially away from the outer valve member 42 against the force of the spring 112. The spring 112 and piston 100 apply a torque to the rocker arms 302 to resist pivoting of the rocker arms and resist relative rotation between the inner and outer valve members 40 and 42.

Each of the surfaces 300 of the rocker arms 302 is contoured. The contour of the surface 300 causes the point of engagement of the piston 110 with the rocker arm 302 to vary along the surface 300 as the relative angular positions of the inner and outer valve members 40 and 42 change. Varying the point of contact between the piston 110 and the rocker arm 302 varies the torque applied to the rocker arm by the piston. While the force applied to the rocker arm 302 by the piston 110 does not change, the length of the moment arm of the force applied to the rocker arm changes. Thus, the torque applied to the rocker arm 302 varies depending on the relative angular positions of the inner and outer valve members 40 and 42.

Upon rotation of the input shaft 50 and the inner valve member 40 relative to the outer valve member 42, the rocker arms 302 pivot relative to the inner valve member. The amount of pivotal movement of the rocker arms 302 depends on the relative rotation between the inner and outer valve members 40 and 42. The points of contact of the piston 110 with the rocker arms 302 and therefore, the length of the moment arms of the forces applied to the rocker arms depends on the amount of pivotal movement of the rocker arms relative to the inner valve member 40. Thus, the resistance to relative rotation between the inner and outer valve members 40 and 42 due to the piston 110, the spring 112, and the rocker arms 302 varies as the relative angular positions of the inner and outer valve members change.

## Claims

1. A steering system (10; 190; 290) for a vehicle, said steering system comprising:
first and second valve members (40, 42) which are rotatable relative to each other to port fluid to a vehicle power steering motor (30);
a rocker arm (122; 302) pivotally connected to said first valve member (40), said rocker arm being pivotal relative to said first valve member by said second valve member (42) upon relative rotation between said first and second valve members; and
means (110, 112) for applying force to said rocker arm (122; 302) to resist pivoting of said rocker arm relative to said first valve member (40) by said second valve member (42) to thereby resist relative rotation between said first and second valve members.

2. A steering system (10; 190; 290) as defined in claim 1 further including means for varying the resistance to pivoting movement of said rocker arm (122; 302) relative to said first valve member (40).

3. A steering system (10; 190; 290) as defined in claim 1 wherein said means (110, 112) for applying force to said rocker arm includes a force transmitting member (110) engageable with said rocker arm (122; 302) and movable relative to said rocker arm (122; 302) in a direction transverse to the pivot axis of said rocker arm and means (112) for urging said force transmitting member (110) toward said rocker arm.

4. A steering system (10; 190; 290) as defined in claim 3 wherein said means (112) for urging said force transmitting toward said rocker arm includes a spring (112).

5. A steering system (10; 190; 290) as defined in claim 1 wherein said first and second valve members are substantially cylindrical, said second valve member (42) encloses said first valve member (40).

6. A steering system (10; 190; 290) as defined in claim 1 wherein said second valve member (42) has surface means (134) defining a recess (132), said rocker arm (122; 302) having a portion extending into the recess and engaging said surface means (134) to enable force to be transmitted between said second valve member (42) and said rocker arm (122; 302) upon relative rotation between said first and second valve members.

7. A steering system (10; 190; 290) as defined in claim 1 wherein relative rotation between said first and second valve members moves a pivot axis of said rocker arm (122, 302) relative to said second valve member (42), said rocker arm having a first portion (130) against which force is applied by said second valve member (42) to pivot said rocker arm (122; 302) in a first direction about its pivot axis upon movement of the pivot axis of said rocker arm (122; 302) relative to said second valve member (42), said rocker arm having a second portion (140, 142; 304, 306) which extends transversely to said first portion (130) and against which force urging said rocker to pivot in a second direction about its pivot axis is applied by said means (110, 112) for applying force to said rocker arm (122; 302).

8. A steering system (190) as defined in claim 1 further including means (220, 222) for decreasing the resistance to relative rotation between said first and second valve members (40, 42) as the speed of the vehicle decreases.

9. A steering system (190) as defined in claim 8 wherein said means (110, 112) for applying force to said rocker arm (122) includes a force transmitting member (110) engageable with said rocker arm (122) and movable relative to said rocker arm (122) in a direction transverse to the pivot axis of said rocker arm and means (112) for applying a first force to said force transmitting member (110) to urge said force transmitting member (110) toward said rocker arm (122).

10. A steering system (190) as defined in claim 9 further including means (222) for applying a second force to said force transmitting member (110) to urge said force transmitting member away from said rocker arm (122).

11. A steering system (190) as defined in claim 10 further including means for increasing the second force applied to said force transmitting member (110) as the speed of the vehicle decreases.

12. A steering system (190) as defined in claim 10 wherein said means (222) for applying the second force to said force transmitting member (110) includes surface means defining a chamber (220) which contains fluid under pressure, the fluid pressure in said chamber (220) acting on said force transmitting member (110) to urge said force transmitting member away from said rocker arm (122).

13. A steering system (190) as defined in claim 12 further including means for increasing the fluid pressure in said chamber (220) as the speed of the vehicle decreases to thereby increase the force urging said force transmitting member (110) away from said rocker arm (122).

14. A steering system (10; 190; 290) as defined in claim 1 further including means for rendering said means (110, 112) for applying force to said rocker arm (122, 302) ineffective when the speed of the vehicle is below a predetermined speed.

15. A steering system (10; 190; 290) as defined in claim 14 wherein said means for applying force to said rocker arm (122, 30) includes a force transmitting member (110) engageable with said rocker arm and movable relative to said rocker arm in a direction transverse to the pivot axis of said rocker arm (122, 302) and means (112) for applying a first force to said force transmitting member (110) to urge said force transmitting member toward said rocker arm (122; 302).

16. A steering system (190) as defined in claim 15 wherein said means for rendering said means (110) for applying force to said rocker arm (122) ineffective includes means (220, 222) for applying a second force to said force transmitting member urging said force transmitting member (110) away from said rocker arm (122).

17. A steering system (190) as defined in claim 16 wherein said means (220, 222) for applying a second force to said force transmitting member (110) includes a second force transmitting member (222) engageable with said first force transmitting meter and surface means defining a chamber (220) containing fluid under pressure, the fluid pressure in said chamber (220) acting against a portion of said second force transmitting member (222) to urge said second force transmitting member (222) toward said first force transmitting member (110) and to effect movement of said first force transmitting member (110) away from said rocker arm (122).

18. A steering system (190) as defined in claim 14 wherein said means for rendering said means for applying force to said rocker arm (122) ineffective includes a pump (18) for supplying fluid pressure to a chamber (220) in said means for rendering said means for applying force to said rocker arm (122) ineffective when the speed of the vehicle is above the predetermined speed and means for rendering said pump (18) ineffective to supply fluid pressure to said chamber (220) when the speed of the vehicle exceeds the predetermined speed.

19. A steering system (10; 190; 290) as defined in claim 1 wherein said means (110 for applying force to said rocker arm (122; 302) includes means for varying the location where force is applied to said rocker arm (122; 302) as the relative angular positions of said first and second valve members (40, 42) change during relative rotation between said valve members.

20. A steering system (290) as defined in claim 1 wherein said means (110, 112) for applying force to said rocker arm (302) includes a force transmitting member (110), said force transmitting member including surface means (114) engageable with surface means (300) on said rocker arm (302), said force transmitting member (110) being movable relative to said rocker arm (302) in a direction transverse to the pivot axis of said rocker arm (302), said surface means on said force transmitting member (110) and said rocker arm (302) having contours that change the point of engagement of said force transmitting member (110) with said rocker arm (302) during relative rotation between said first and second valve members (40, 42).

21. A steering system (290) as defined in claim 20 wherein said surface means (300) on said rocker arm (302) has a contour that varies the point of engagement of said force transmitting member (110) with said rocker arm (302) as the relative angular positions of said first and second valve members (40, 42) change during relative rotation between said first and second valve members.

22. A steering system (10; 190; 290) as defined in claim 1 wherein said rocker arm (122, 302) includes a central portion (125, 308) which is pivotally connected with said first valve member (40), a first portion (130) which extends in a first direction from said central portion (125; 308) and cooperates with said second valve member (42), a second portion (140; 304) which is adjacent to said means (110, 112) for applying force to said rocker arm (122, 302) and which extends from the central portion (125; 308) in a second direction which is transverse to the first direction and a third portion (142, 306) which is adjacent said means (110, 122) for applying force to said rocker arm (122; 302) and which extends from the central portion (125; 308) in a third direction which is transverse to the first direction, said rocker arm (122; 302) being pivotal relative to said first valve member (40) under the influence of force applied to said first portion (130) of said rocker arm upon relative rotation between said first and second valve members (40, 42) in one direction to press said second portion (140; 304) of said rocker arm against said means (110, 112) for applying force to said rocker arm (122; 302) and to move said third portion (142; 306) of said rocker arm away from said means for applying force to said rocker arm, said rocker arm (122; 302) being pivotal relative to said first valve member (40) under the influence of force applied to said first portion (130) of said rocker arm (122; 302) upon relative rotation between said first and second valve members (40, 42) in another direction opposite to the one direction of relative rotation between said valve members to press said third portion (142; 306) of said rocker arm against said means for applying force to said rocker arm and to move said second portion (140; 304) of said rocker arm away from said means for applying force to said rocker arm.

23. A steering system (10; 190; 290) as set forth in claim 22 further including pin means (124) extending outwardly from said first valve member (40) to said central portion (125; 308) of said rocker arm and bearing means (126) disposed between said pin means (124) and said central portion (125; 308) of said rocker arm (122; 302) to support said rocker arm for pivotal movement relative to said pin means (124).

24. A steering system (10; 190; 290) as set forth in claim 22 wherein said second valve member (42) includes surface means (134) for defining a recess (132) in said second valve member (42), said first portion (130) of said rocker arm extending into said recess (132), said surface means (134) being effective to apply force against a first side of said first portion of said rocker arm (122; 302) upon relative rotation between said first and second valve members (40, 42) in the one direction, said surface means (134) being effective to apply force against a second side of said first portion (130) of said rocker arm (122, 302) upon relative rotation between said first and second valve members (40, 42) in the other direction.

25. A steering system (190) as defined in claim 1 wherein said second valve member (42) includes surface means for defining an elongated chamber (220) having a longitudinal axis extending parallel to and offset from an axis about which said first and second valve members (40, 42) rotate relative to each other, said steering system further including an elongated piston (222) at least partially disposed in said elongated chamber (220) in said second valve member (42), and means for transmitting fluid pressure to one end portion of said chamber (220) to urge said piston (222) toward said means (110, 112) for applying force to said rocker arm (122).

26. A steering system (10; 190; 290) for a vehicle, said steering system comprising:
first and second valve members (40, 42) which are rotatable relative to each other;
a plurality of force transmitting elements (122; 302) which are movable relative to said first and second valve members (40, 42) upon relative rotation between said first and second valve members; and
means (110, 112) for applying force to said plurality of force transmitting elements (122; 302) to resist movement of said plurality of force transmitting elements (122; 302) and relative rotation between said first and second valve members (40, 42);
each force transmitting element (122; 302) of said plurality of force transmitting elements including a central portion (125; 308), a first portion (130) which extends in a first direction from said central portion (125; 308) and is connected with said second valve member (42), a second portion (140, 304) which extends from the central portion (125, 308) in a second direction which is transverse to the first direction, said second portion (140; 304) being disposed adjacent to said means (110, 112) for applying force to said force transmitting elements (122; 302), and a third portion (142; 306) which extends from the central portion (125; 308) in a third direction which is transverse to the first direction, said third portion (142; 306) being disposed adjacent to said means (110; 112) for applying force to said force transmitting elements (122; 302), each of said force transmitting elements (122; 302) being movable relative to said first valve member (40) under the influence of force applied to said first portion (130) of each of said force transmitting elements (122, 302) upon relative rotation between said first and second valve members (40, 42) in one direction to press said second portion (140; 304) of each of said force transmitting elements (122; 302) against said means for applying force to each of said force transmitting elements and to move said third portion (142; 306) of each of said force transmitting elements away from said means for applying force to each of said force transmitting elements, each of said force transmitting elements (122; 302) being movable relative to said first valve member (40) under the influence of force applied to said first portion (130) of each of said force transmitting elements upon relative rotation between said first and second valve members (40, 42) in another direction opposite to the one direction of relative rotation between said valve members to press said third portion (142; 306) of each of said force transmitting elements against said means (110, 112) for applying force to said force transmitting elements and to move said second portion (140; 304) of each of said force transmitting elements way from said means for applying force to said force transmitting elements.

27. A steering system (10; 190; 290) as defined in claim 26 wherein said central portion (125; 308) of each of said force transmitting elements is pivotally connected with said first valve member (40).

28. A steering system (190) as defined in claim 26 or 27 further including speed responsive means for varying the force applied to said plurality of force transmitting elements (122) by said means (110, 112) for applying force to said plurality of force transmitting elements, said speed responsive means including a plurality of pistons (222) disposed in chambers (220) having central axes which extend parallel to and are spaced from an axis about which said first and second valve members (40, 42) rotate relative to each other and means for transmitting to said chambers (220) a fluid pressure which varies as a function of vehicle speed to urge said pistons (222) toward said means (110, 112) for applying force to said plurality of force transmitting elements (122) with a force which varies as a function of vehicle speed.

## Patentansprüche

1. Lenksystem (10; 190; 290) für ein Fahrzeug, wobei das Lenksystem folgendes aufweist:
erste und zweite Ventilglieder (40, 42), die relativ zueinander drehbar sind, um Strömungsmittel bzw. ein Fluid zu einem Fahrzeug-Servo- bzw. Lenkhilfsmotor (30) zu leiten;
einen Kipp- oder Schwenkhebel (122; 302), der schwenkbar mit dem ersten Ventilglied (40) verbunden ist, wobei der Schwenkhebel bezüglich des ersten Ventilgliedes schwenkbar ist, und zwar durch das zweite Ventilglied (42) bei einer Relativdrehung zwischen den ersten und zweiten Ventilgliedern; und
Mittel (110, 112) zum Anlegen einer Kraft an den Schwenkhebel (122; 302), um einem Verschwenken des Schwenkhebels relativ zu dem ersten Ventilglied (40) durch das zweite Ventilglied (42) zu widerstehen, um dadurch einer Relativdrehung zwischen den ersten und zweiten Ventilgliedern zu widerstehen.

2. Lenksystem (10; 190; 290) nach Anspruch 1, das ferner Mittel aufweist zum Variieren des Widerstands gegen die Schwenkbewegung des Schwenkarms (122; 302) relativ zu dem ersten Ventilglied (40).

3. Lenksystem (10; 190; 290) nach Anspruch 1, wobei die Mittel (110, 112) zum Anlegen einer Kraft an den Schwenkhebel folgendes aufweisen:
ein Kraftübertragungsglied (110), das mit dem Schwenkhebel (122; 302) in Eingriff bringbar und relativ zu dem Schwenkhebel (122; 302) bewegbar ist, und zwar in einer Richtung quer zur Schwenkachse des Schwenkhebels; und
Mittel (112) zum Drücken des Kraftübertragungsgliedes (110) zu dem Schwenkhebel.

4. Lenksystem (10; 190; 290) nach Anspruch 3, wobei die Mittel (112) zum Drücken des Kraftübertragungsgliedes zu dem Schwenkhebel eine Feder (112) aufweist.

5. Lenksystem (10; 190; 290) nach Anspruch 1, wobei die ersten und zweiten Ventilglieder im wesentlichen zylindrisch sind, und wobei das zweite Ventilglied (42) das erste Ventilglied (40) umschließt.

6. Lenksystem (10; 190; 290) nach Anspruch 1, wobei das zweite Ventilglied (42) Oberflächenmittel (134) aufweist, die eine Ausnehmung (132) definieren, wobei der Schwenkhebel (122; 302) einen Teil aufweist, der sich in die Ausnehmung erstreckt und mit den Oberflächenmitteln (134) in Eingriff steht, um zu ermöglichen, daß Kraft zwischen dem zweiten Ventilglied (42) und dem Schwenkhebel (122; 302) übertragen wird, und zwar bei einer Relativdrehung zwischen den ersten und zweiten Ventilgliedern.

7. Lenksystem (10; 190; 290) nach Anspruch 1, wobei eine Relativdrehung zwischen den ersten und zweiten Ventilgliedern eine Schwenkachse des Schwenkhebels (122; 302) relativ zu dem zweiten Ventilglied (42) bewegt, wobei der Schwenkhebel einen ersten Teil (130) aufweist, gegen den eine Kraft durch das zweite Ventilglied (42) angelegt wird, um den Schwenkhebel (122; 302) in einer ersten Richtung um seine Schwenkachse zu schwenken, und zwar bei einer Bewegung der Schwenkachse des Schwenkhebels (122; 302) relativ zu dem zweiten Ventilglied (42), wobei der Schwenkhebel einen zweiten Teil (140, 142; 304, 306) aufweist, der sich quer zu dem ersten Teil (130) erstreckt und gegen den eine Kraft angelegt wird, die den Schwenkhebel zum Schwenken in eine zweite Richtung um seine Schwenkachse drückt, und zwar durch die Mittel (110, 112) zum Anlegen einer Kraft an den Schwenkhebel (122; 302).

8. Lenksystem (190) nach Anspruch 1, wobei das System ferner Mittel (220, 222) aufweist zum Verringern des Widerstands gegenüber der Relativdrehung zwischen den ersten und zweiten Ventilgliedern (40, 42), wenn sich die Geschwindigkeit des Fahrzeugs verringert.

9. Lenksystem (190) nach Anspruch 8, wobei die Mittel (110, 112) zum Anlegen einer Kraft an den Schwenkhebel (122) folgendes aufweisen:
ein Kraftübertragungsglied (110), das mit dem Schwenkhebel in Eingriff bringbar und relativ dazu bewegbar ist, und zwar in einer Richtung quer zur Schwenkachse des Schwenkhebels; und
Mittel zum Anlegen einer ersten Kraft an das Kraftübertragungsglied (110), um das Kraftübertragungsglied (110) zu dem Schwenkhebel (122) zu drücken.

10. Lenksystem (190) nach Anspruch 9, das Mittel (222) aufweist zum Anlegen einer zweiten Kraft an das Kraftübertragungsglied (110), um das Kraftübertragungsglied von dem Schwenkhebel (122) weg zu drücken.

11. Lenksystem (190) nach Anspruch 10, das ferner Mittel aufweist zum Erhöhen der zweiten Kraft, die an das Kraftübertragungsglied (110) angelegt wird, wenn sich die Fahrzeuggeschwindigkeit verringert.

12. Lenksystem (190) nach Anspruch 10, wobei die Mittel (222) zum Anlegen der zweiten Kraft an das Kraftübertragungsglied (110) Oberflächenmittel aufweisen, die eine Kammer (220) definieren, welche ein unter Druck stehendes Strömungsmittel oder Fluid enthält, wobei der Fluiddruck in der Kammer (220) auf das Kraftübertragungsglied (110) wirkt, um das Kraftübertragungsglied von dem Schwenkhebel (122) weg zu drücken.

13. Lenksystem (190) nach Anspruch 12, das Mittel aufweist zum Erhöhen des Fluiddrucks in der Kammer (220), wenn sich die Geschwindigkeit des Fahrzeugs verringert, um dadurch die Kraft zu erhöhen, die das Kraftübertragungsglied (110) von dem Schwenkhebel (122) weg drückt.

14. Lenksystem (10; 190; 290) nach Anspruch 1, das ferner Mittel aufweist, die bewirken, daß die Mittel (110, 112) zum Anlegen einer Kraft an den Schwenkhebel (122; 302) ineffektiv bzw. nicht aktiv sind, wenn die Geschwindigkeit des Fahrzeugs unterhalb einer vorbestimmten Geschwindigkeit ist.

15. Lenksystem (10; 190; 290) nach Anspruch 14, wobei die Mittel zum Anlegen einer Kraft an den Schwenkhebel (122; 302) folgendes aufweisen:
ein Kraftübertragungsglied (110), das mit dem Schwenkhebel in Eingriff bringbar und relativ dazu bewegbar ist, und zwar in einer Richtung quer zur Schwenkachse des Schwenkhebels (122; 302); und
Mittel (122) zum Anlegen einer ersten Kraft an die Kraftübertragungsmittel (110), um das Kraftübertragungsglied zu dem Schwenkhebel (122; 302) zu drücken.

16. Lenksystem (190) nach Anspruch 15, wobei die Mittel zum Bewirken, daß die Mittel (110) zum Anlegen einer Kraft an den Schwenkhebel (122) ineffektiv sind, Mittel (220, 222) aufweist zum Anlegen einer zweiten Kraft an das Kraftübertragungsglied, die das Kraftübertragungsglied (110) von dem Schwenkhebel (122) weg drückt.

17. Lenksystem (190) nach Anspruch 16, wobei die Mittel (220, 222) zum Anlegen einer zweiten Kraft an das Kraftübertragungsglied (110) folgendes aufweisen:
ein zweites Kraftübertragungsglied (222), das mit dem ersten Kraftübertragungsglied in Eingriff bringbar ist; und
Oberflächenmittel, die eine Kammer (220) definieren, die ein unter Druck stehendes Fluid enthält, wobei das Fluid in der Kammer (220) gegen einen Teil des zweiten Kraftübertragungsgliedes (222) wirkt, um das zweite Kraftübertragungsglied (222) zu dem ersten Kraftübertragungsglied (110) zu drücken und eine Bewegung des ersten Kraftübertragungsgliedes (110) weg von dem Schwenkhebel (122) zu bewirken.

18. Lenksystem (190) nach Anspruch 14, wobei die Mittel zum Bewirken, daß die Mittel zum Anlegen einer Kraft an den Schwenkhebel (122) ineffektiv sind, eine Pumpe (18) aufweisen zum Vorsehen bzw. Liefern eines Fluiddrucks an eine Kammer (220) in den Mitteln zum Bewirken, daß die Mittel zum Anlegen einer Kraft an den Schwenkhebel (122) ineffektiv sind, wenn die Geschwindigkeit des Fahrzeugs oberhalb der vorbestimmten Geschwindigkeit ist, und wobei Mittel vorgesehen sind zum Bewirken, daß die Pumpe (18) nicht aktiv bzw. ineffektiv ist einen Fluiddruck an die Kammer (220) zu liefern, wenn die Geschwindigkeit des Fahrzeugs die vorbestimmte Geschwindigkeit übersteigt.

19. Lenksystem (10; 190; 290) nach Anspruch 1, wobei die Mittel (110) zum Anlegen einer Kraft an den Schwenkhebel (122; 302) Mittel aufweisen zum Variieren der Stelle, an der die Kraft an den Schwenkhebel (122; 302) angelegt wird, während sich die relativen Winkelpositionen der ersten und zweiten Ventilglieder (40, 42) während einer Relativdrehung zwischen den Ventilgliedern ändern.

20. Lenksystem (290) nach Anspruch 1, wobei die Mittel (110, 112) zum Anlegen einer Kraft an den Schwenkhebel (302) ein Kraftübertragungsglied (110) aufweisen, wobei das Kraftübertragungsglied Oberflächenmittel (114) umfaßt, die mit Oberflächenmitteln (300) an dem Schwenkhebel (302) in Eingriff bringbar sind, wobei das Kraftübertragungsglied (110) relativ zu dem Schwenkhebel (302) in einer Richtung quer zur Schwenkachse des Schwenkhebels (302) bewegbar ist, wobei die Oberflächenmittel an dem Kraftübertragungsglied (110) und dem Schwenkarm (302) Konturen besitzen, welche den Eingriffspunkt des Kraftübertragungsgliedes (110) mit dem Schwenkhebel (302) während einer Relativdrehung zwischen den ersten und zweiten Ventilgliedern (40, 42) verändern.

21. Lenksystem (290) nach Anspruch 20, wobei die Oberflächenmittel (300) an dem Schwenkhebel (302) eine Kontur aufweisen, welche den Eingriffspunkt des Kraftübertragungsgliedes (110) mit dem Schwenkhebel (302) variiert, wenn sich die relativen Winkelpositionen der ersten und zweiten Ventilglieder (40, 42) während einer Relativdrehung zwischen den ersten und zweiten Ventilgliedern verändern.

22. Lenksystem (10; 190; 290) nach Anspruch 1, wobei der Schwenkhebel (122; 302) folgendes aufweist: einen Mittelteil (125; 308), der schwenkbar mit dem ersten Ventilglied (40) verbunden ist, einen ersten Teil (130), der sich in einer ersten Richtung von dem Mittelteil (125; 308) erstreckt und mit dem zweiten Ventilglied (42) zusammenarbeitet, einen zweiten Teil (140; 304), der benachbart zu den Mitteln (110, 112) zum Anlegen einer Kraft an den Schwenkhebel (122; 302) angeordnet ist und sich von dem Mittelteil (125; 308) in einer zweiten Richtung, quer zur ersten Richtung, erstreckt, und einen dritten Teil (142; 306), der benachbart zu den Mitteln (110, 112) zum Anlegen einer Kraft an den Schwenkhebel (122; 302) liegt, und der sich von dem Mittelteil (125; 308) in einer dritten Richtung, quer zur ersten Richtung, erstreckt, wobei der Schwenkhebel (122; 302) relativ zu dem ersten Ventilglied (40) unter der Kraft, die an den ersten Teil (130) des Schwenkhebels bei einer Relativbewegung zwischen den ersten und zweiten Ventilgliedern (40, 42) angelegt wird, schwenkbar ist, und zwar in eine Richtung, um dem zweiten Teil (140, 304) des Schwenkhebels gegen die Mittel (110, 112) zum Anlegen einer Kraft an den Schwenkhebel (122; 302) zu drücken und den dritten Teil (142; 306) des Schwenkhebels von den Mitteln zum Anlegen einer Kraft an den Schwenkhebel weg zu bewegen, wobei der Schwenkhebel (122; 302) relativ zu dem ersten Ventilglied (40) schwenkbar ist unter dem Einfluß von Kraft, die auf den ersten Teil (130) des Schwenkhebels (122; 302) angelegt wird, bei einer Relativdrehung zwischen den ersten und zweiten Ventilgliedern (40, 42) in einer anderen Richtung entgegengesetzt zu der einen Relativdrehrichtung zwischen den Ventilgliedern, um den dritten Teil (142; 306) des Schwenkhebels gegen die Mittel zum Anlegen einer Kraft an den Schwenkhebel zu drücken und um den zweiten Teil (140; 304) des Schwenkhebels von den Mitteln zum Anlegen einer Kraft an den Schwenkhebel weg zu bewegen.

23. Lenksystem (10; 190; 290) nach Anspruch 22, das ferner Stiftmittel (124) aufweist, die sich vom ersten Ventilglied (40) nach außen zu dem Mittelteil (125; 308) des Schwenkhebels erstrecken, und Lagermittel (126), die zwischen den Stiftmitteln (124) und dem Mittelteil (125; 308) des Schwenkhebels (122; 302) angeordnet sind, um den Schwenkhebel für eine Schwenkbewegung relativ zu den Stiftmitteln (124) zu tragen.

24. Lenksystem (10; 190; 290) nach Anspruch 22, wobei das zweite Ventilglied (42) Oberflächenmittel (134) aufweist zum definieren einer Ausnehmung (132) in dem zweiten Ventilglied (42), wobei der erste Teil (130) des Schwenkhebels sich in die Ausnehmung (132) erstreckt, wobei die Oberflächenmittel (134) bewirken, daß eine Kraft gegen eine erste Seite des ersten Teils des Schwenkhebels (122; 302) angelegt wird bei einer Relativdrehung zwischen den ersten und zweiten Ventilgliedern (40, 42) in die eine Richtung, wobei die Oberflächenmittel (134) bewirken, daß eine Kraft gegen eine zweite Seite des ersten Teils (130) des Schwenkhebels (122; 302) angelegt wird bei einer Relativdrehung zwischen den ersten und zweiten Ventilgliedern (40, 42) in der anderen Richtung.

25. Lenksystem (190) nach Anspruch 1, wobei die zweiten Ventilmittel (42) folgendes aufweisen: Oberflächenmittel zum Definieren einer langgestreckten Kammer (220) mit einer Längsachse, die sich parallel zu und versetzt von einer Achse erstreckt, um die sich die ersten und zweiten Ventilglieder (40, 42) relativ zueinander drehen, wobei das Lenksystem ferner einen langgestreckten Kolben (222) aufweist, der zumindest teilweise in der langgestreckten Kammer (220) in dem zweiten Ventilglied (42) angeordnet ist, und Mittel zum Übertragen von Fluiddruck zu dem einen Endteil der Kammer (220), um den Kolben (222) zu den Mitteln (110, 112) zum Anlegen einer Kraft an den Schwenkhebel (122) zu drücken.

26. Lenksystem (10; 190; 290) für ein Fahrzeug, wobei das Lenksystem folgendes aufweist:
erste und zweite Ventilglieder (40, 42), die relativ zueinander drehbar sind;
eine Vielzahl von Kraftübertragungselementen (122; 302), die relativ zu den ersten und zweiten Ventilgliedern (40, 42) bewegbar sind bei einer Relativdrehung zwischen den ersten und zweiten Ventilgliedern; und
Mittel (110, 112) zum Anlegen einer Kraft an die Vielzahl von Kraftübertragungselementen (122; 302), um einer Bewegung der Vielzahl von Kraftübertragungselementen (122; 302) und einer Relativdrehung zwischen den ersten und zweiten Ventilgliedern (40, 42) zu widerstehen;
wobei jedes Kraftübertragungselement (122; 302) der Vielzahl von Kraftübertragungselementen folgendes aufweist: einen Mittelteil (125; 308), einen ersten Teil (130), der sich in einer ersten Richtung von dem Mittelteil (125; 308) erstreckt und mit dem zweiten Ventilglied (42) verbunden ist, einen zweiten Teil (140; 304), der sich von dem Mittelteil (125; 308) in einer zweiten Richtung, die quer zur ersten Richtung ist, erstreckt, wobei der zweite Teil (140; 304) benachbart zu den Mitteln (110, 112) zum Anlegen einer Kraft an die Kraftübertragungselemente (122; 302) angeordnet ist, und einen dritten Teil (142; 306), der sich von dem Mittelteil (125; 308) in einer dritten Richtung, quer zur ersten Richtung, erstreckt, wobei der dritte Teil (142; 306) benachbart zu den Mitteln (110, 112) zum Anlegen einer Kraft an die Kraftübertragungselemente (122; 302) angeordnet ist, wobei jedes der Kraftübertragungselemente (122; 302) relativ zum ersten Ventilglied (40) bewegbar ist unter dem Einfluß von Kraft, die an den ersten Teil (130) von jedem der Kraftübertragungselemente (122; 302) angelegt wird, bei einer Relativdrehung zwischen den ersten und zweiten Ventilgliedern (40, 42) in einer Richtung, um den zweiten Teil (140; 304) von jedem der Kraftübertragungselemente (122; 302) gegen die Mittel zum Anlegen einer Kraft an jedes der Kraftübertragungselemente zu drücken, und um den dritten Teil (142; 306) jedes der Kraftübertragungselemente von den Mitteln zum Anlegen einer Kraft an jedes der Kraftübertragungselemente weg zu bewegen, wobei jedes der Kraftübertragungselemente (122; 302) relativ zu dem ersten Ventilglied (40) bewegbar ist unter dem Einfluß von Kraft, die an den ersten Teil (130) von jedem der Krafübertragungselemente bei einer Relativdrehung zwischen den ersten und zweiten Ventilgliedern (40, 42) in eine anderen Richtung entgegengesetzt zu der einen Richtung der Relativdrehung zwischen den Ventilgliedern angelegt wird, um den dritten Teil (142; 306) von jedem der Kraftübertragungselemente gegen die Mittel (110, 112) zum Anlegen einer Kraft an die Kraftübertragungselemente zu drücken, und um den zweiten Teil (140; 304) von jedem der Kraftübertragungselemente von den Mitteln zum Anlegen von Kraft an die Kraftübertragungselemente weg zu bewegen.

27. Lenksystem (10; 190; 290) nach Anspruch 26, wobei der Mittelteil (125; 308) von jedem der Kraftübertragungselemente schwenkbar mit dem ersten Ventilglied (40) verbunden ist.

28. Lenksystem (190) nach Anspruch 26 oder 27, wobei das System ferner auf Geschwindigkeit ansprechende Mittel aufweist zum Variieren der Kraft, die an die Vielzahl von Kraftübertragungselementen (122) durch die Mittel (110, 112) zum Anlegen von Kraft an die Vielzahl von Kraftübertragungselementen angelegt wird, wobei die auf Geschwindigkeit ansprechenden Mittel eine Vielzahl von Kolben (222) aufweisen, die in Kammern (220) angeordnet sind, welche Mittelachsen aufweisen, die sich parallel zu und beabstandet von einer Achse erstrecken, um die sie die ersten und zweiten Ventilglieder (40, 42) relativ zueinander drehen, und Mittel zum Übertragen eines Fluiddrucks an die Kammer (220), der sich als eine Funktion der Fahrzeuggeschwindigkeit verändert, um die Kolben (222) zu den Mitteln (110, 112) zum Anlegen einer Kraft an die Vielzahl von Kraftübertragungselementen (122) zu drücken, und zwar mit einer Kraft, die sich als eine Funktion der Fahrzeuggeschwindigkeit verändert.

## Revendications

1. Système de direction (10 ; 190 ; 290) pour un véhicule, ledit système de direction comportant :
des premier et second éléments à soupapes (40, 42) qui peuvent tourner l'un par rapport à l'autre pour diriger un fluide vers un moteur (30) de direction assistée de véhicule ;
un bras oscillant (122 ; 302) relié de façon pivotante audit premier élément à soupape (40), ledit bras oscillant pouvant pivoter par rapport audit premier élément à soupape sous l'action dudit second élément à soupape (42) lors d'une rotation relative entre lesdits premier et second éléments à soupapes ; et
des moyens (110, 112) destinés à appliquer une force audit bras oscillant (122 ; 302) pour résister au pivotement dudit bras oscillant par rapport audit premier élément à soupape (40) sous l'action dudit second élément à soupape (42) afin de résister ainsi à une rotation relative entre lesdits premier et second éléments à soupapes.

2. Système de direction (10 ; 190 ; 290) selon la revendication 1, comprenant en outre des moyens destinés à faire varier la résistance au mouvement de pivotement dudit bras oscillant (122 ; 302) par rapport audit premier élément à soupape (40).

3. Système de direction (10 ; 190 ; 290) selon la revendication 1, dans lequel lesdits moyens (110, 112) destinés à appliquer une force audit bras oscillant comprennent un élément (110) de transmission de force pouvant entrer en contact avec ledit bras oscillant (122 ; 302) et mobile par rapport audit bras oscillant (122 ; 302) dans une direction transversale à l'axe de pivotement dudit bras oscillant, et un moyen (112) destiné à solliciter ledit élément (110) de transmission de force vers ledit bras oscillant.

4. Système de direction (10 ; 190 ; 290) selon la revendication 3, dans lequel ledit moyen (112) destiné à solliciter ledit élément de transmission de force vers ledit bras oscillant comprend un ressort (112).

5. Système de direction (10 ; 190 ; 290) selon la revendication 1, dans lequel lesdits premier et second éléments à soupapes sont sensiblement cylindriques, ledit second élément à soupape (42) renfermant ledit premier élément à soupape (40).

6. Système de direction (10 ; 190 ; 290) selon la revendication 1, dans lequel ledit second élément à soupape (42) présente un moyen de surface (134) définissant un évidement (132), ledit bras oscillant (122 ; 302) ayant une partie pénétrant dans l'évidement et engageant ledit moyen à surface (134) pour permettre la transmission d'une force entre ledit second élément à soupape (42) et ledit bras oscillant (122 ; 302) lors d'une rotation relative entre lesdits premier et second éléments à soupapes.

7. Système de direction (10 ; 190 ; 290) selon la revendication 1, dans lequel une rotation relative entre lesdits premier et second éléments à soupapes déplace un axe de pivotement dudit bras oscillant (122 ; 302) par rapport audit second élément à soupape (42), ledit bras oscillant ayant une première partie (130) contre laquelle une force est appliquée par ledit second élément à soupape (42) pour faire pivoter ledit bras oscillant (122 ; 302) dans un premier sens autour de son axe de pivotement lors d'un mouvement de l'axe de pivotement dudit bras oscillant (122 ; 302) par rapport audit second élément à soupape (42), ledit bras oscillant ayant une seconde partie (140, 142 ; 304, 306) qui s'étend transversalement à ladite première partie (130) et contre laquelle une force sollicitant ledit bras oscillant pour le faire pivoter dans un second sens autour de son axe de pivotement est appliquée par lesdits moyens (110, 112) destinés à appliquer une force audit bras oscillant (122 ; 302).

8. Système de direction (190) selon la revendication 1, comprenant en outre des moyens (220, 222) destinés à diminuer la résistance à une rotation relative entre lesdits premier et second éléments à soupapes (40, 42) lorsque la vitesse du véhicule diminue.

9. Système de direction (190) selon la revendication 8, dans lequel lesdits moyens (110, 112) destinés à appliquer une force audit bras oscillant (122) comprennent un élément (110) de transmission de force pouvant entrer en contact avec ledit bras oscillant (122) et mobile par rapport audit bras oscillant (122) dans une direction transversale à l'axe de pivotement dudit bras oscillant et un moyen (112) destiné à appliquer une première force audit élément (110) de transmission de force pour solliciter ledit élément (110) de transmission de force vers ledit bras oscillant (122).

10. Système de direction (190) selon la revendication 9, comprenant en outre un moyen (222) destiné à appliquer une seconde force audit élément (110) de transmission de force pour solliciter ledit élément de transmission de force à l'écart dudit bras oscillant (122).

11. Système de direction (190) selon la revendication 10, comprenant en outre un moyen pour augmenter la seconde force appliquée audit élément (110) de transmission de force lorsque la vitesse du véhicule diminue.

12. Système de direction (190) selon la revendication 10, dans lequel ledit moyen (222) destiné à appliquer la seconde force audit élément (110) de transmission de force comprend un moyen de surface définissant une chambre (220) qui contient un fluide sous pression, la pression du fluide dans ladite chambre (220) agissant sur ledit élément (110) de transmission de force pour solliciter ledit élément de transmission de force à l'écart dudit bras oscillant (122).

13. Système de direction (190) selon la revendication 12, comprenant en outre un moyen destiné à élever la pression du fluide dans ladite chambre (220) lorsque la vitesse du véhicule diminue afin d'augmenter ainsi la force sollicitant ledit élément (110) de transmission de force à l'écart dudit bras oscillant (122).

14. Système de direction (10 ; 190 ; 290) selon la revendication 1, comprenant en outre un moyen destiné à rendre inefficaces lesdits moyens (110, 112) destinés à appliquer une force audit bras oscillant (122 ; 302) lorsque la vitesse du véhicule est inférieure à une vitesse prédéterminée.

15. Système de direction (10 ; 190 ; 290) selon la revendication 14, dans lequel lesdits moyens destinés à appliquer une force audit bras oscillant (122 ; 302) comprennent un élément (110) de transmission de force pouvant entrer en contact avec ledit bras oscillant et mobile par rapport audit bras oscillant dans une direction transversale à l'axe de pivotement dudit bras oscillant (122 ; 302), et un moyen (112) destiné à appliquer une première force audit élément (110) de transmission de force pour solliciter ledit élément de transmission de force vers ledit bras oscillant (122 ; 302).

16. Système de direction (190) selon la revendication 15, dans lequel ledit moyen destiné à rendre inefficace ledit moyen (110) d'application d'une force audit bras oscillant (122) comprend un moyen (220, 222) destiné à appliquer une seconde force audit élément de transmission de force sollicitant ledit élément de transmission de force (110) à l'écart dudit bras oscillant (122).

17. Système de direction (190) selon la revendication 16, dans lequel ledit moyen (220, 222) destiné à appliquer une seconde force audit élément (110) de transmission de force comprend un second élément (222) de transmission de force pouvant entrer en contact avec ledit premier élément de transmission de force et un moyen de surface définissant une chambre (220) contenant un fluide sous pression, la pression du fluide dans ladite chambre (220) agissant contre une partie dudit second élément (222) de transmission de force pour solliciter ledit second élément (222) de transmission de force vers ledit premier élément (110) de transmission de force et effectuer un mouvement dudit premier élément (110) de transmission de force l'éloignant dudit bras oscillant (122).

18. Système de direction (190) selon la revendication 14, dans lequel ledit moyen destiné à rendre inefficace lesdits moyens d'application de force audit bras oscillant (122) comprend une pompe (18) destinée à appliquer la pression d'un fluide à une chambre (220) dans ledit moyen pour rendre inefficace lesdits moyens destinés à appliquer une force audit bras oscillant (122) lorsque la vitesse du véhicule est supérieure à la vitesse prédéterminée, et un moyen destiné à rendre inefficace ladite pompe (18) pour appliquer la pression d'un fluide à ladite chambre (220) lorsque la vitesse du véhicule dépasse la vitesse prédéterminée.

19. Système de direction (10 ; 190 ; 290) selon la revendication 1, dans lequel ledit moyen (110) destiné à appliquer une force audit bras oscillant (122 ; 302) comprend un moyen destiné à faire varier la position dans laquelle une force est appliquée audit bras oscillant (122 ; 302) lorsque les positions angulaires relatives desdits premier et second éléments à soupapes (40, 42) changent pendant une rotation relative entre lesdits éléments à soupapes.

20. Système de direction (290) selon la revendication 1, dans lequel lesdits moyens (110, 112) destinés à appliquer une force audit bras oscillant (302) comprennent un élément (110) de transmission de force, ledit élément de transmission de force comprenant un moyen à surface (114) pouvant entrer en contact avec un moyen à surface (300) sur ledit bras oscillant (302), ledit élément (110) de transmission de force étant mobile par rapport audit bras oscillant (302) dans une direction transversale à l'axe de pivotement dudit bras oscillant (302), ledit moyen à surface sur ledit élément (110) de transmission de force et ledit bras oscillant (302) ayant des contours qui font changer le point de contact dudit élément (110) de transmission de force avec ledit bras oscillant (302) pendant une rotation relative entre lesdits premier et second éléments à soupapes (40, 42).

21. Système de direction (290) selon la revendication 20, dans lequel ledit moyen à surface (300) sur ledit bras oscillant (302) présente un contour qui fait varier le point de contact dudit élément (110) de transmission de force avec ledit bras oscillant (302) pendant que les positions angulaires relatives desdits premier et second éléments à soupapes (40, 42) changent au cours d'une rotation relative entre lesdits premier et second éléments à soupapes.

22. Système de direction (10 ; 190 ; 290) selon la revendication 1, dans lequel ledit bras oscillant (122 ; 302) comprend une partie centrale (125 ; 308) qui est reliée de façon pivotante audit premier élément à soupape (40), une première partie (130) qui s'étend dans une première direction depuis ladite partie centrale (125 ; 308) et coopère avec ledit second élément à soupape (42), une deuxième partie (140 ; 304) qui est adjacente auxdits moyens (110, 112) destinés à appliquer une force audit bras oscillant (122 ; 302) et qui s'étend depuis la partie centrale (125 ; 308) dans une seconde direction qui est transversale à la première direction, et une troisième partie (142 ; 306) qui est adjacente auxdits moyens (110, 112) destinés à appliquer une force audit bras oscillant (122 ; 302) et qui s'étend depuis la partie centrale (125 ; 308) dans une troisième direction qui est transversale à la première direction, ledit bras oscillant (122 ; 302) pouvant pivoter par rapport audit premier élément à soupape (40) sous l'effet d'une force appliquée à ladite première partie (130) dudit bras oscillant lors d'une rotation relative entre lesdits premier et second éléments à soupapes (40, 42) dans un premier sens pour pousser ladite deuxième partie (140 ; 304) dudit bras oscillant contre lesdits moyens (110, 112) destinés à appliquer une force audit bras oscillant (122 ; 302) et éloigner ladite troisième partie (142 ; 306) dudit bras oscillant desdits moyens destinés à appliquer une force audit bras oscillant, ledit bras oscillant (122 ; 302) pouvant pivoter par rapport audit premier élément à soupape (40) sous l'effet d'une force appliquée à ladite première partie (130) dudit bras oscillant (122 ; 302) lors d'une rotation lors d'une rotation relative entre lesdits premier et second éléments à soupapes (40, 42) dans un autre sens opposé au premier sens de rotation relative entre lesdits éléments à soupapes pour pousser ladite troisième partie (142 ; 306) dudit bras oscillant contre lesdits moyens destinés à appliquer une force audit bras oscillant et éloigner ladite deuxième partie (140 ; 304) dudit bras oscillant desdits moyens destinés à appliquer une force audit bras oscillant.

23. Système de direction (10 ; 190 ; 290) selon la revendication 22, comprenant en outre un moyen à tourillon (124) faisant saillie vers l'extérieur dudit premier élément à soupape (40) jusqu'à ladite partie centrale (125 ; 308) dudit bras oscillant et un moyen à palier (126) disposé entre ledit moyen à tourillon (124) et ladite partie centrale (125 ; 308) dudit bras oscillant (122 ; 302) pour supporter ledit bras oscillant afin qu'il puisse pivoter par rapport audit moyen à tourillon (124).

24. Système de direction (10 ; 190 ; 290) selon la revendication 22, dans lequel ledit second élément à soupape (42) comprend un moyen à surface (134) destiné à définir un évidement (132) dans ledit second élément à soupape (42), ladite première partie (130) dudit bras oscillant pénétrant dans ledit évidement (132), ledit moyen à surface (134) ayant pour effet d'appliquer une force contre un premier côté de ladite première partie dudit bras oscillant (122 ; 302) lors d'une rotation relative entre lesdits premier et second éléments à soupapes (40, 42) dans le premier sens, ledit moyen à surface (134) ayant pour effet d'appliquer une force contre un second côté de ladite première partie (130) dudit bras oscillant (122 ; 302) lors d'une rotation relative entre lesdits premier et second éléments à soupapes (40, 42) dans l'autre sens.

25. Système de direction (190) selon la revendication 1, dans lequel ledit second élément à soupape (42) comprend un moyen à surface destiné à définir une chambre allongée (220) ayant un axe longitudinal s'étendant parallèlement à, et décalé de, un axe autour duquel lesdits premier et second éléments à soupapes (40, 42) tournent l'un par rapport à l'autre, ledit système de direction comprenant en outre un piston allongé (222) disposé au moins partiellement dans ladite chambre allongée (220) dans ledit second élément à soupape (42), et un moyen destiné à transmettre la pression d'un fluide à une partie extrême de ladite chambre (220) pour solliciter ledit piston (222) vers lesdits moyens (110, 112) destinés à appliquer une force audit bras oscillant (122).

26. Système de direction (10 ; 190 ; 290) pour un véhicule, ledit système de direction comportant :
des premier et second éléments à soupapes (40, 42) qui peuvent tourner l'un par rapport à l'autre ;
plusieurs éléments (122 ; 302) de transmission de force qui sont mobiles par rapport auxdits premier et second éléments à soupapes (40, 42) lors d'une rotation relative entre lesdits premier et second éléments à soupapes ; et
des moyens (110, 112) destinés à appliquer une force à ladite pluralité d'éléments (122 ; 302) de transmission de force pour résister à un mouvement de ladite pluralité d'éléments (122 ; 302) de transmission de force et à une rotation relative entre lesdits premier et second éléments à soupapes (40, 42) ;
chaque élément (122 ; 302) de transmission de force de ladite pluralité d'éléments de transmission de force comprenant une partie centrale (125 ; 308), une première partie (130) qui s'étend dans une première direction depuis ladite partie centrale (125 ; 308) et qui est reliée audit second élément à soupape (42), une deuxième partie (140 ; 304) qui s'étend depuis la partie centrale (125 ; 308) dans une deuxième direction qui est transversale à la première direction, ladite deuxième partie (140 ; 304) étant disposée de façon à être adjacente auxdits moyens (110, 112) destinés à appliquer une force auxdits éléments (122 ; 302) de transmission de force, et une troisième partie (142 ; 306) qui s'étend depuis la partie centrale (125 ; 308) dans une troisième direction qui est transversale à la première direction, ladite troisième partie (142 ; 306) étant disposée de façon à être adjacente auxdits moyens (110, 112) destinés à appliquer une force auxdits éléments (122 ; 302) de transmission de force, chacun desdits éléments (122 ; 302) de transmission de force étant mobile par rapport audit premier élément à soupape (40) sous l'effet d'une force appliquée à ladite première partie (130) de chacun desdits éléments (122 ; 302) de transmission de force lors d'une rotation relative entre lesdits premier et second éléments à soupapes (40, 42) dans un premier sens pour pousser ladite deuxième partie (140 ; 304) de chacun desdits éléments (122 ; 302) de transmission de force contre lesdits moyens destinés à appliquer une force à chacun desdits éléments de transmission de force et éloigner ladite troisième partie (142 ; 306) de chacun desdits éléments de transmission de force desdits moyens destinés à appliquer une force à chacun desdits éléments de transmission de force, chacun desdits éléments de transmission de force (122 ; 302) étant mobile par rapport audit premier élément à soupape (40) sous l'effet d'une force appliquée à ladite première partie (130) de chacun desdits éléments de transmission de force lors d'une rotation relative entre lesdits premier et second éléments à soupape (40, 42) dans un autre sens opposé au premier sens de rotation relative entre lesdits éléments à soupapes pour pousser ladite troisième partie (142 ; 306) de chacun desdits éléments de transmission de force contre lesdits moyens (110, 112) destinés à appliquer une force auxdits éléments de transmission de force et pour éloigner ladite deuxième partie (140 ; 304) de chacun desdits éléments de transmission de force desdits moyens destinés à appliquer une force auxdits éléments de transmission de force.

27. Système de direction (10 ; 190 ; 290) selon la revendication 26, dans lequel ladite partie centrale (125 ; 308) de chacun desdits éléments de transmission de force est reliée de façon pivotante audit premier élément à soupape (40).

28. Système de direction (190) selon la revendication 26 ou 27, comprenant en outre un moyen sensible à la vitesse destiné à faire varier la force appliquée à ladite pluralité d'éléments (122) de transmission de force par lesdits moyens (110, 112) destinés à appliquer une force à ladite pluralité d'éléments de transmission de force, ledit moyen sensible à la vitesse comprenant plusieurs pistons (222) disposés dans des chambres (220) ayant des axes centraux qui s'étendent parallèlement à, et sont espacés de, un axe autour duquel lesdits premier et second éléments à soupapes (40, 42) tournent l'un par rapport à l'autre, et un moyen destiné à transmettre auxdites chambres (220) la pression d'un fluide qui varie en fonction de la vitesse du véhicule pour solliciter lesdits pistons (222) vers lesdits moyens (110, 112) destinés à appliquer une force à ladite pluralité d'éléments (122) de transmission de force avec une force qui varie en fonction de la vitesse du véhicule.
